# DEMANDE DE BREVET EUROPEEN

(11) **EP 0 880 900 A1**
(43) Date de publication de la demande: **02.12.1998**
(21) Numéro de dépôt: 98401041.3
(22) Date de dépôt: 28.04.1998
(51) Int. Cl.: A23C 9/123, A23C 9/13, A23C 11/10

(54) **Procédé perfectionné de préparation d'un lait fermenté**

(30) Priorité: 28.04.1997 FR 9705199
(71) Demandeur: Sarl Biodyn, 94300 Vincennes (FR)
(72) Inventeur: Hamon, François, 94300 Vincennes (FR); Luc, Marie-Cécile, née Klein, 06270 Villeneuve Loubet (FR); Luquet, François-Marie, 91400 Orsay (FR)
(74) Mandataire: Laget, Jean-Loup

(57) **Abrégé**

Un procédé d'obtention d'un produit laitier fermenté est obtenu à partir de lait de mammifères élevés naturellement en herbages exempts de produits thermo-résistants. Ledit lait est soumis aux traitements successifs suivants :
- contrôle de l'acidité maximale à 17° Dornic,
- Ecrémage,
- enrichissement en matières sèches hydrophiles du lait dans une proportion de 4% en poids,
- thermisation unique à 85°C pendant 15 minutes environ,
- contrôle bactériologique,
- dépistage des inhibiteurs de fermentation,
- refroidissement à 40° C,
- ensemencement par des cultures fraîches de lacto-bacilles acidophilus associés à des streptocoques lactiques mésophiles dans la proportion de 3/4 de lactobacilles acidophilus et 1/4 de streptocoques, dans une proportion de 4 % en poids,
- chambrage,
- mise en étuve à 37° C jusqu'à obtention minimale d'une population d'environ 400 millions de lactobacilles acidophiles par gramme et d'une acidité de 90° Dornic,
- refroidissement rapide à 5° C.

Pour l'étape d'enrichissement en matières séchées hydrophiles du lait, on utilise des matières exemptes de caséine.

## Description

La présente invention concerne un perfectionnement au brevet français n°2.492.227.

Dans ce brevet ont été décrits un produit laitier fermenté et son procédé d'obtention. Ce produit a été reconnu pour son effet bénéfique sur la flore intestinale et ses qualités de digestibilité. En raison de ces avantages, ce produit est de plus en plus fréquemment indiqué dans l'alimentation des personnes relevant d'opérations chirurgicales lourdes ou de graves maladies nécessitant des traitements de chimiothérapie et/ou de radiothérapie.

Le procédé d'obtention du produit décrit dans le brevet français n° 2.492.227 précité s'étend depuis le stade de l'élevage des vaches laitières jusqu'au stockage du produit conditionné.

Le lait qui sert de base à la fabrication du produit laitier doit provenir de vaches d'espèces rustiques élevées naturellement en herbages exempts de produits thermo-résistants et traités dans des conditions d'hygiène tout-à-fait rigoureuses.

Après la traite, le lait est soumis dans un laps de temps très court (quelques heures) aux traitements successifs suivants :
- contrôle de l'acidité maximale à 17° Dornic,
- Ecrémage,
- enrichissement en matières sèches hydrophiles du lait dans une proportion de 4 % en poids,
- thermisation unique à 85° C pendant 15 minutes environ,
- contrôle bactériologique,
- dépistage des inhibiteurs de fermentation,
- refroidissement à 40° C,
- ensemencement par des cultures fraîches de lacto-bacilles acidophilus associés à des steptocoques lactiques mésophiles dans la proportion de 3/4 de lactobacilles acidophilus et 1/4 de streptocoques, dans une proportion de 4 % en poids,
- chambrage,
- mise en étuve à 37° C jusqu'à obtention minimale d'une population d'environ 400 millions de germes par gramme et d'une acidité de 90° Dornic,
- refroidissement rapide à 5° C.

Les inventeurs ont constaté que l'on pouvait encore améliorer la digestibilité du produit laitier fermenté obtenu par ce procédé en utilisant pour l'étape d'enrichissement en matières sèches hydrophiles du lait des matières exemptes de caséine.

Ces matières seront de préférence des protéines animales, composées d'albumine et/ou de globuline, ou végétales, par exemple du lait ou des protéines de soja.

Selon un mode préférentiel de mise en oeuvre du procédé amélioré selon l'invention, on utilise pour cette étape d'enrichissement des hydrolysats de protéines, d'origine animale ou végétale, exemptes de caséine.

Ces hydrolysats sont obtenus par voie enzymatique avec élimination des enzymes par thermisation.

Les inventeurs ont également mis en évidence que le présent procédé amélioré pouvait être appliqué aussi bien à un produit fermenté obtenu à partir de lait de bovins qu'à partir du lait d'autres mammifères notamment ovins ou caprins.

## Revendications

1. Procédé d'obtention d'un produit laitier fermenté obtenu à partir de lait de mammifères élevés naturellement en herbages exempts de produits thermo-résistants, ledit lait étant soumis aux traitements successifs suivants :
- contrôle de l'acidité maximale à 17° Dornic,
- Ecrémage,
- enrichissement en matières sèches hydrophiles du lait dans une proportion de 4 % en poids,
- thermisation unique à 85° C pendant 15 minutes environ,
- contrôle bactériologique,
- dépistage des inhibiteurs de fermentation,
- refroidissement à 40° C,
- ensemencement par des cultures fraîches de lacto-bacilles acidophilus associés à des streptocoques lactiques mésophiles dans la proportion de 3/4 de lactobacilles acidophilus et 1/4 de streptocoques, dans une proportion de 4 % en poids,
- chambrage,
- mise en étuve à 37° C jusqu'à obtention minimale d'une population d'environ 400 millions de lactobacilles acidophiles par gramme et d'une acidité de 90° Dornic,
- refroidissement rapide à 5° C,
caractérisé en ce que pour l'étape d'enrichissement en matières séchées hydrophiles du lait, on utilise des matières exemptes de caséine.

2. Procédé selon la revendication 1, caractérisé en ce ce que les matières sont des protéines d'origine animale et/ou végétale.

3. Procédé selon l'une quelconque des revendications 1 ou 2, caractérisé en ce que on utilise des hydrolysats.

4. Procédé selon la revendication 3, caractérisé en ce que les hydrolysats sont obtenus par voie enzymatique avec élimination des enzymes par thermisation.

5. Produit laitier fermenté caractérisé en ce qu'il est obtenu par le procédé selon l'une quelconque des revendications 1 à 5.

6. Produit laitier fermenté selon la revendication 5 caractérisé en ce qu'il est obtenu à partir de lait de mammifère bovin.

7. Produit laitier fermenté selon la revendication 5 caractérisé en ce qu'il est obtenu à partir du lait de mammifère ovin.

8. Produit laitier fermenté selon la revendication 5 caractérisé en ce qu'il est obtenu à partir de lait de mammifère caprin.

9. Produit laitier fermenté selon la revendication 5 caractérisé en ce qu'il est obtenu à partir de jus de soja.

10. Produit laitier fermenté selon la revendication 5 caractérisé en ce qu'il est obtenu à partir de lait de mammifère enrichi de jus ou d'hydrolisat de soja.
